# EUROPEAN PATENT APPLICATION

(11) **EP 2 360 894 A1**
(43) Date of publication of application: **24.08.2011**
(21) Application number: 11446501.6
(22) Date of filing: 14.02.2011
(51) Int. Cl.: H04L 29/12, H04L 29/08

(54) **Methods and systems for network based address book based on personal cards**

(30) Priority: 15.02.2010 US 705841
(71) Applicant: Telefonaktiebolaget L M Ericsson (Publ), 164 83 Stockholm (SE)
(72) Inventor: Lindgren, Anders, 125 74, Älvsjö (SE); Boberg, Christer, 137 55, Tungelsta (SE); Klein, Mikael, 141 69, Huddinge (SE); Lassborn, Sofie, 191 43, Sollentuna (SE)
(74) Representative: Sjöberg, Mats Hakan

(57) **Abstract**

Systems and methods according to these exemplary embodiments provide for reducing the amount of data stored in a network. This can occur by reducing the quantity of personal contact cards associated with an individual that are stored within a network by replacing the quantity of stored copies with links to the single copy on the network.

## Description

### TECHNICAL FIELD

The present invention relates generally to communications and in particular to methods, devices and systems for network based address books.

### BACKGROUND

During the past years, the interest in using mobile and landline/wireline computing devices in day-to-day communications has increased. Desktop computers, workstations, and other wireline computers currently allow users to communicate, for example, via e-mail, video conferencing, and instant messaging (IM). Mobile devices, for example, mobile telephones, handheld computers, personal digital assistants (PDAs), etc., also allow users to communicate via e-mail, video conferencing, IM, and the like. Mobile telephones have conventionally served as voice communication devices, but through technological advancements they have recently proved to be effective devices for communicating data, graphics, etc. Wireless and landline technologies continue to merge into a more unified communication system, as user demand for seamless communications across different platforms increases, which in turn creates more usage, and leads to more services and system improvements.

For example, with the advancement of Internet technologies and mobile telephony, users want to enjoy new communication services, which can be accessed anytime, anywhere, on any device, independent of the access network. Users expect services that support their mobility at home, on travel, and on business, and want to be able to use different end user devices. They expect service profiles tailored to the end user devices' capabilities, which enable them to switch easily between their private and business roles, i.e., from one device used at home to another device used at a business location. Moreover, users desire devices which enable easy and comfortable subscriber self-administration.

One service of interest is provided by network based address books. Such network based address books make contact information associated with other users available to a subscriber from the network. Currently users deal with multiple address books, e.g., those which are device resident, SIM resident, service dependent or ISP offered, which can cause difficult and unpleasant user experiences in terms of locating accurate contact information for a particular user. Additionally, the various network based address books are generally manually synchronized and are often out of synchronization with one another. Also, existing address books typically do not provide any network to network interface via which a user can subscribe to or fetch personal card information from other users. Thus, a user typically populates his or her address book using information that is obtained from different places, e.g., from business cards. Thus, the task of populating and updating contact information in a device's address book can be difficult.

A network based address book may be implemented in a server, for example so that the user has its address book stored in the network. Thus, the personal data provided by a user "A" is typically copied and stored in many places of the network, as user "B" who is an authorized contact of user A retrieves the personal data of user A and stores it in a corresponding location associated with his or her network address book. Thus, the amount of contact data stored in the network can become huge, as the personal card data for each user A is stored both in the personal card server of user A as well as in the network based address books of numerous other users.

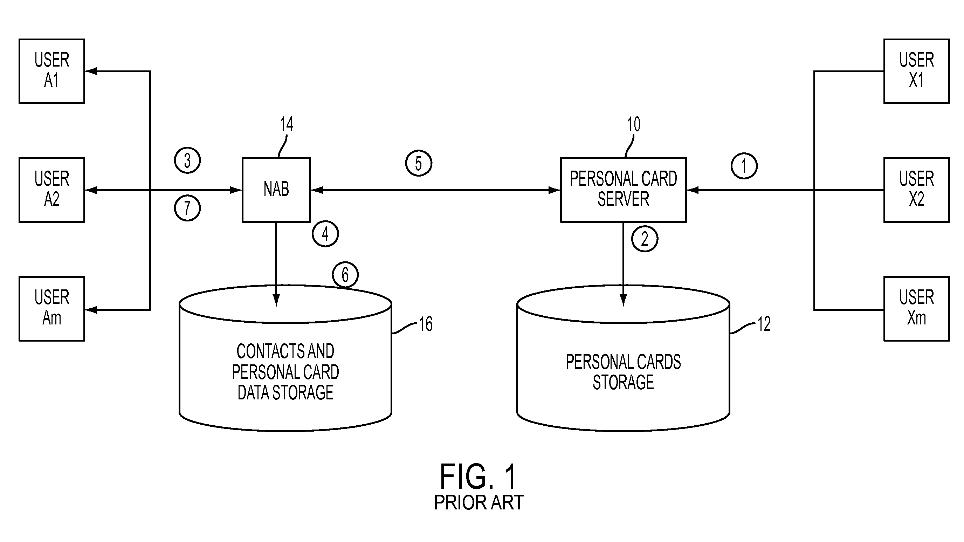

This situation is illustrated conceptually in Figure 1, in which users X1 to Xn are considered to store their personal card data (which can also be an electronic business card) in a corresponding personal card server 10, and users X1 to Xn are contacts of users A1 to An. The personal card server 10 may store the personal card data of users X1 to Xn in a personal card storage device 12. User A1 to An may share a server 14 that maintains the network based address book (NAB) and this NAB server 14 may include contacts and personal card data storage device 16. NAB 14 may communicate with the personal card server 12. The personal card information of a user may include, in addition to the address of the user, a picture, video or any data determined by the user.

Referring to the circled numbers in Figure 1, for a user An to receive the personal data of a user X1 the following steps are performed. In step 1, one or more of users X1 to Xn send the personal card data to the personal card server 10. In step 2, the personal card server 10 stores the data received from the users in the personal cards storing device 12. In step 3, one or more of the users A1 to An send contact information to NAB 14. In the same step or in a different step, the users A1 to An may send to NAB 14 a request to subscribe to the personal card data of one or more of users X1 to Xn. In step 4, NAB 14 stores the contacts in the address book. In step 5, NAB 14 fetches the personal card data of users X1 to Xn from the personal card server 10, in step 6 NAB 14 stores that data in the contacts and personal card data storage device 16, and in step 7 NAB 14 notifies one or more of users A1 to An about the received data.

Thus, according to this mechanism, the personal card data of one or all users X1 to Xn is stored in the personal card server 10 and also in the contacts and personal card data storing device 16 or NAB 14. A problem with this arrangement is that since the stored data for each personal card may be large (on the order of megabytes for example) and the number of authorized contacts may be large (on the order of hundreds for example), the amount of data that is then duplicated (in server 10 and 16) is even larger. For example, the amount of storage necessary in the existing systems may be in the order of 100,000,000 MBytes, given that the number of users may be one million, the size of the personal card data may be around 1 MByte, and the number of contacts in a typical NAB 14 may be 100.

As mentioned above, this situation is exacerbated since network address books permit storage of multiple copies of the same (or similar) contact information. Prior to the electronic age, and even now in some cases, people use paper business cards to keep contact information in, e.g., a Rolodex file. When network address books were created it was natural to extend this paper paradigm to create an electronic network address book, i.e., with each person keeping their own separate copy of a person's contact information as would be the case in a Rolodex. However, this practice adds a multiplying factor to the amount of network storage which is required to store personal contact information in network address books.

Accordingly, it would be desirable to have methods and systems to improve the efficiency of networks and network based address books.

### SUMMARY

Exemplary embodiments relate to systems and methods for using network based address books. Advantages according to exemplary embodiments described herein include, for example, the ability to reduce data storage in a network by reducing the quantity of redundantly saved personal contact cards by replacing multiple stored quantities of a single personal contact card with a link to a stored personal contact card. However, it will be appreciated by those skilled in the art that such advantages are not to be construed as limitations of the present invention except to the extent that they are explicitly recited in one or more of the appended claims.

According to one exemplary embodiment, a communications node includes: a memory configured to store a first personal contact card (PCC) document containing contact information associated with a user, and PCC information related to at least one other user in a network, wherein the PCC information includes a link to a second PCC document which contains contact information for the at least one other user; a communications interface configured to receive and transmit information associated with the first PCC document and the PCC information related to at least one other user in the network; and a processor configured to execute instructions associated with authorization for changes to and access to the stored first PCC document and the stored PCC information related to the at least one other user in the network.

According to one exemplary embodiment, a method for reducing storage of data in a network includes: storing a first personal contact card (PCC) document containing contact information associated with a user, and PCC information related to at least one other user in a network, wherein the PCC information includes a link to a second PCC document which contains contact information for the at least one other user; receiving and transmitting information associated with the first PCC document and the PCC information related to at least one other user in the network; and executing instructions associated with authorization for changes to and access to the stored first PCC document and the stored PCC information related to the at least one other user in the network.

### BRIEF DESCRIPTION OF THE DRAWINGS

The accompanying drawings illustrate exemplary embodiments, wherein:

Figure 1 is a schematic diagram of a conventional communication system including a network based address book server and users;

Figure 2 illustrates a data structure according to exemplary embodiments;

Figure 3 depicts a user equipment and a communications network according to exemplary embodiments;

Figure 4 is a schematic diagram of a device used by a user according to an exemplary embodiment;

Figure 5 is a schematic diagram of a server according to exemplary embodiments; and

Figure 6 shows a flowchart of a method for reducing storage in a network according to exemplary embodiments.

### DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

According to exemplary embodiments, in order to prevent unnecessary duplication of data, methods and systems are described below which reduce the amount of data stored in a network by allowing for the sharing of business card and/or personal contact card (PCC) information between users. For example, a network based address book (NAB) can be created which uses a personal card document for every contact and stores those documents in a PCC Extensible Markup Language data management server (XDMS) together with a user's own personal card. Instead of storing additional copies of those personal card documents, one or more links to those personal card documents can be used to give access to that contact information to other users in their respective network address books. Prior to describing exemplary systems and methods associated with NABS, presence technology which is used in the information exchange process according to exemplary embodiments will first be discussed to provide some context since presence technology can be used to implement aspects of these exemplary embodiments.

The concept of "presence" and associated concepts are, for example, standardized by the Internet Engineering Task Force (IETF) and the standardization specifications, the entire content of which are incorporated by reference herein, may be found at http://www.ietf.org. An introduction to presence is provided below. Systems and methods which use presence can be found in various networks, including the networks described herein, and can be used to improve networks which use network based address books. A number of entities may be implemented in a presence server architecture. One of these entities is the presentity, which is an entity that provides presence information. Another entity is the presence server, which receives presence information from presentities. The watcher is an entity that is interested in the presence information, e.g., information indicating that other users and their respective devices are "online" and other related status information.

The presence information, e.g., location, willingness to communicate at a certain time or with certain users, information regarding business cards, etc., may be collected and utilized by presence servers, which may notify authorized "watchers" who are interested in certain presence information. Watcher applications may be implemented in wireline and/or wireless terminals to obtain presence information from the presence severs about other users. This may come in the form of a notification, issued to the watcher by the presence server. The presence entities may use Session Initiation Protocol (SIP) as a presence protocol and uses a general event notification framework defined for SIP, and as such, makes use of the SUBSCRIBE and NOTIFY methods defined in the presence specifications.

An event package, which is introduced in the presence system and is defined in RFC 3265, is based on the concept of a presence agent, which is a logical entity that is capable of accepting subscriptions, storing subscription state, and generating notifications when there are changes in presence. The entity is defined as a logical one, since it may be co-resident with another entity. A Presence User Agent (PUA) manipulates presence information for a presentity. This manipulation can be the side effect of some other action (such as using an Extensible Markup Language (XML) Configuration Access Protocol (XCAP) PUT message to add a new Contact) or can be performed explicitly through the publication of presence documents, e.g., using SIP PUBLISH. A user may have many devices, such as a cell phone and a personal digital assistant (PDA), each of which may be independently generating a component of the overall presence information for a presentity. PUAs push data into the presence system, but are outside of it, in that they do not receive SUBSCRIBE messages or send NOTIFY messages.

A presence agent (PA) is a SIP user agent which is capable of receiving SUBSCRIBE requests, responding to them, and generating notifications of changes in the presence state. A presence agent may have knowledge of the presence state of a presentity. This means that it has access to presence data manipulated by PUAs for the presentity. A PA is also a notifier (as defined in RFC 3265) that supports the presence event package.

A presence server is a physical entity that may act as either a presence agent or as a proxy server for SUBSCRIBE requests. When acting as a PA, it is aware of the presence information of the presentity through some protocol means. When acting as a proxy, the SUBSCRIBE requests are proxied to another entity that may act as a PA. When an entity, the subscriber, wishes to learn about presence information from some other user, it creates a SUBSCRIBE request. The SUBSCRIBE request is carried along SIP proxies as other SIP requests. In most cases, it eventually arrives at a presence server, which may either generate a response to the request (in which case it acts as the presence agent for the presentity), or proxy it on to an edge presence server. If the edge presence server handles the subscription, it is acting as the presence agent for the presentity.

The presence agent, whether in the presence server or edge presence server, first authenticates the subscription, then authorizes it. If authorized, an OK response is returned. If authorization could not be obtained at this time, the subscription is considered "pending", and another response is returned. In both cases, the PA sends an immediate NOTIFY message containing the state of the presentity and of the subscription. As the state of the presentity changes, the PA generates NOTIFYs containing those state changes to all subscribers with authorized subscriptions. Changes in the state of the subscription itself can also trigger NOTIFY requests, that state is carried in the Subscription-State header field of the NOTIFY message, and would typically indicate whether the subscription is active or pending.

In many communications applications, such as Voice over IP, instant messaging, and presence, the network servers may access per-user information in the process of servicing a request. This per-user information may reside within the network, but may be managed by the end user themselves, and its management can be performed through a multiplicity of access points, including the web, a wireless handset, or a PC application.

There are many examples of per-user information. One is presence authorization policy, which defines rules about which watchers are allowed to subscribe to a presentity, and what information they are allowed to access. Another is presence lists, which are lists of users whose presence is desired by a watcher. One way to obtain presence information for the list is to subscribe to a resource which represents that list. In this case, the Resource List Server (RLS) requires access to this list in order to process a SIP SUBSCRIBE request for it. Another way to obtain presence for the users on the list is for a watcher to subscribe to each user individually. In that case, it is convenient to have a server store the list, and when the client boots, it fetches the list from the server. This would allow a user to access their resource lists from different clients.

A protocol that may be used to manipulate this per-user data is XCAP. XCAP is a set of conventions for mapping XML documents and document components into hypertext transport protocol (HTTP) Uniform Resource Identifiers (URIs), rules for how the modification of one resource affects another, data validation constraints, and authorization policies associated with access to those resources. Using this structure, normal HTTP primitives may be used to manipulate the data.

Each application (where an application refers to a use case that implies a collection of data and associated semantics) that makes use of XCAP specifies an application usage. This application usage defines the XML schema for the data used by the application, along with other pieces of information. One task of XCAP is to allow clients to read, write, modify, create and delete pieces of that data. An XCAP server acts as a repository for collections of XML documents. There may be documents stored for each application. Within each application, there are documents stored for each user. Each user may have a multiplicity of documents for a particular application. To access some component of one of those documents, XCAP defines an algorithm for constructing a URI that may be used to reference that component. Components refer to any element or attribute within the document. Thus, the HTTP URIs used by XCAP point to a document, or to pieces of information that are finer grained than the XML document itself. An HTTP resource which follows the naming conventions and validation constraints defined here is called an XCAP resource. Because XCAP resources are also HTTP resources, they can be accessed using HTTP methods. Reading an XCAP resource is accomplished with HTTP GET, creating or modifying one is done with HTTP PUT, and removing one of the resources is done with an HTTP DELETE. With this presence background, which can be used in support of and/or in conjunction with exemplary embodiments described herein, an example of an exemplary NAB and an exemplary data structure are now described below.

According to exemplary embodiments, a network based address book, or a NAB for each user, based on PCC documents can be stored in a network. This NAB can include, for example, only one electronic copy of the PCC document for each individual user, which PCC document can include, e.g., a business card, contact information, video, a photo, or any data determined by the user. Note that although some exemplary embodiments limit the number of PCC documents stored in an NAB per user to one, other exemplary embodiments may be less restrictive and may limit the number of stored PCC documents per user to a (preferably low) predetermined number. This eliminates or reduces redundant copies of a user's PCC document in the network, which in turn reduces the memory needed for storing multiple copies of a single PCC document.

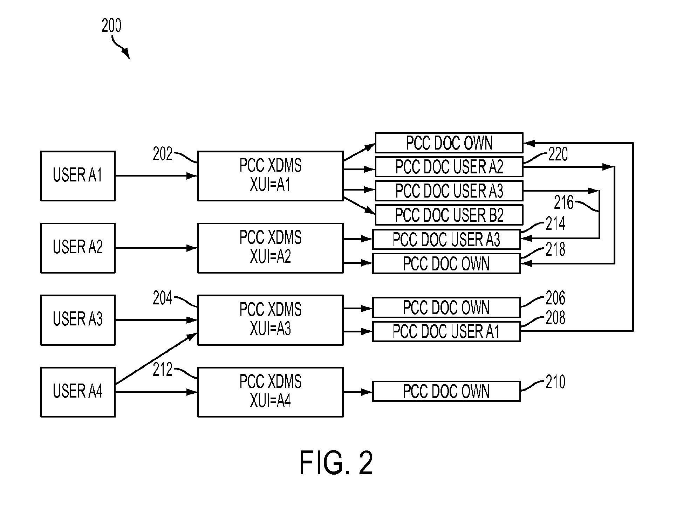

For example, assume that every user in a network has a directory in a PCC XDMS, where each user can store his or her own PCC document and PCC documents for his or her contacts. According to exemplary embodiments, a stored PCC document can be a complete (or partially complete PCC document) or a link to another PCC document which belongs to any other user in the network. Various naming conventions can be used for the PCC documents, such as, a nickname or a business name as long as the name used for the PCC document allows for differentiation between the user's own PCC document and other user's PCC documents. This allows a single user to share their own PCC document with any other user in the network and for the original information to be only stored once in the network. As mentioned earlier, according to alternative exemplary embodiments, other quantities of copies of a single PCC document can be stored in the network as desired as well as modified copies. An exemplary data structure will now be described for allowing a reduction in the quantity of redundantly stored PCC documents in a network with respect to Figure 2.

According to exemplary embodiments, data structure 200 includes a plurality of PCC XDMSs each associated with a user by the XCAP user identifier (XUI), e.g., PCC XDMS 202 has an XUI of A1 which is associated with User A1 and PCC XDMS 204 has an XUI of A3 which is associated with User A3. These PCC XDMSs can store PCC documents and/or links to other users' PCC documents. For example, User A3's PCC XDMS 204 has a NAB which includes User A3's own PCC document 206 and a PCC document associated with user A1 208, e.g., implemented as a link to User A1's own PCC document rather than an independently stored copy. User A4 is using User A3's PCC documents as a NAB and User A4 only stores his or her own PCC document 210 in their directory as shown by PCC XDMS XUI=A4 212. User A1 and User A3 share the PCC document about user A3 with User A2 as shown by PCC doc user A3 214 (and the associated information flow line 216). Additionally, User A1 has a link to User A2's own PCC doc 218 as shown by the PCC doc user A2 220.

According to exemplary embodiments, using the above data structure 200, desired messaging and authorizations associated with contacts in an NAB can be performed using PCC XDMS as described by Open Mobile Alliance-Converged Address Book (OMA-CAB), e.g., the permission functions from OMA-XDM 2.1 and the share-by-reference functions from OMA-XDM 2.1 can be used or the functions from OMA-XDM 2.0 and PRS 2.0 can be used. Moreover, as described above, presence functions can also be used in support of exemplary embodiments. For example, presence can be used to find/transmit the link to a PCC document for a user by adding the link as a presence attribute. Examples of presence attributes and methods for adding links to the presence attribute can be found in rfq 4472 dated July 2006 and in the presence data model used by the Presence SIMPLE enabler described in the Presence SIMPLE data specifications, the disclosures of which are incorporated herein by reference. A device associated with or in the network can use this presence information to build an address book in the client by fetching the PCC information directly to the client, e.g., as part of a lightweight NAB solution. According to another exemplary embodiment, lightweight NAB and other exemplary embodiments described herein for data storage reduction can coexist in the same network when PCCs are used as a basis for contact information.

According to another exemplary embodiment, the data structure shown in Figure 2 and the associated exemplary concepts can be expanded to be used elsewhere, e.g., as part of an enterprise address book and/or a public address book. This can be performed by creating a personal user identifier (PSI) that represents the enterprise address book (or the public address book). The PCC XDMS can act as a front end to the enterprise address book and convert entries, e.g., email address book contact information, into PCC documents. A user can have a link to such an entry via the PCC XDMS and have a conversion performed. Additionally, for one exemplary implementation, a search function (or some equivalent function) is supported in the PCC XDMS, e.g., to convert a PCC XDMS XQUERY function into a format used by the enterprise address book, as well as a backend database plug-in structure.

According to other exemplary embodiments, devices which use Synchronization Markup Language (SyncML) in the network can be supported by adding a SyncML client to the PCC XDMS. This combination allows synchronization of documents in the PCC directory with a SyncML address book which may be located on a SyncML server (not shown).

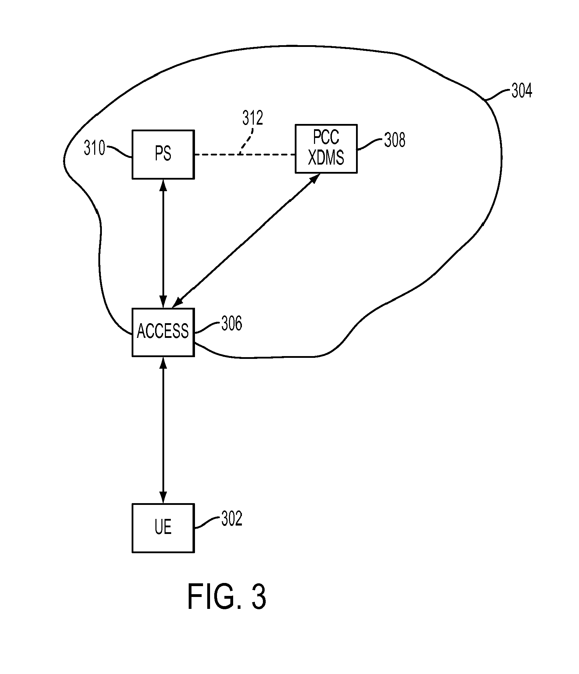

According to another exemplary embodiment, when a user is using a user equipment (UE) or other device which can access the network, the user can access PCC information as shown in Figure 3. Figure 3 shows a UE 302 in communications with a network 304. Access block 306 is a generic representation of the various methods, routes and equipment involved in allowing UE 302 to communicate with the network 304. Within network 304 resides a presence server (PS) 310 and a PCC XDMS 308 (which, while shown as being separate entities, it will be appreciated by those skilled in the art that the presence server 310 can include a PCC XDMS). Dashed line 312 represents the ability for communication to either directly or indirectly flow between the presence server 310 and the PCC XDMS 308. Additionally, it is to be appreciated that more nodes, e.g., an XCAP server, can be present in a communication network 304, but for simplicity only these few nodes are shown in Figure 3.

Over the nodes shown in Figure 3, presence information can be merged into a contact's PCC information in the UE 302 for contacts that also exist in the presence list. The UE 302 can, for example, transmit two SUBSCRIBE messages in support of this, e.g., one SUBSCRIBE message for presence to the presence server 310 and another SUBSCRIBE message to the PCC directory stored in the PCC XDMS 308 which is associated with the user of the UE 302. XCAP directory requests can be used to see which PCC document a user has in a directory. When the UE 302 performs a retrieval of a document in the user's own PCC directory, the UE 302 will receive the reference document as the PCC XDMS 308 will use the stored link and fetch the document on behalf of the user in what is typically a transparent manner to the user, i.e., the PCC XDMS processor acts as a proxy for the UE 302 and therefore the UE 302 does not know if it is a local version or if a link to another user version was used. The UE 302 can store a local copy of all PCC documents for future use, e.g., future off-line use. Additionally, the user can choose which PCC documents to store locally in the UE's 302 memory cache as desired.

Presence can also be used according to exemplary embodiments to publish a user's PCC document or link to the user's PCC document as desired. Additionally in order to find a user for whom one wants presence updates, a resource list and a resource list server (RLS) can be used in a method similar to how they are used in Rich Communication Suite (RCS) since the resource list can include users. According to another exemplary embodiment, a user can obtain another user's telephone number from a webpage, e-mail and/or white pages. Presence can then be used to obtain more information about the user's address. According to an alternative exemplary embodiment, a user can subscribed to another user's personal card if the personal card exists in a PCC XDMS in the network using the user's telephone number.

Accordingly, one or more of the exemplary embodiments described herein advantageously achieves a size reduction of the amount of data stored in the network by allowing an address book where only one copy (or a few copies) of the same PCC needs to be stored in the network. Exemplary embodiments also allow for a user to modify an existing PCC and store it in their own directory, as well as allowing others access to this modified PCC. Similarly, exemplary embodiments contemplate the creation of a new address book by using any set of available PCC documents in the network. Additionally, one or more of the exemplary embodiments advantageously achieve network address books for an enterprise where only one copy of a contact exists in the network. Alternatively, according to an exemplary embodiment, the network administrator, e.g., an enterprise network administrator, may set parameters which control the number of permissible copies of a single user's PCC document allowed in the network. This number of copies could be from one up to any number, e.g., based upon memory constraints of the system, although it is believed that smaller numbers will typically be used to improve memory efficiency. Additionally, the individual and/or the network operator can determine which other users are authorized to access the PCC document of the user as well as the level of access, e.g., viewing, linking, modifying and/or copying.

According to another exemplary embodiment, when multiple copies of a user's PCC document exist in a same network or NAB server, the network can have instructions for updating, synchronizing and removing excess copies as desired. For example, when prompted by a user, or based on some predetermined time period, the network can update all copies of a user's PCC document to either the user's original PCC document or the PCC document with the latest information. Alternatively, a change from the user to his or her PCC document could trigger an update change for people that have subscribed to such an update via, for example, presence. As another alternative exemplary embodiment, in order to minimize proliferation of PCC documents, the network can delete all PCC documents other than an original user's PCC document at some periodicity possibly replacing the other copies with links to the original user's PCC document.

As described above, in some exemplary cases, multiple copies of a user's PCC document can exist in the same network. This can result in the situation where a User X has found four copies of User Y's PCC document, possibly through having a plurality of subscriptions which have located different versions of User Y's PCC document. According to exemplary embodiments various methods can be used to merge these into a single preferred link for User X to reference User X's contact information in User X's network address book. For example, User X can choose the preferred link, the system can automatically choose the most recent version by date of creation for use or other types of decision choices can be made as desired.

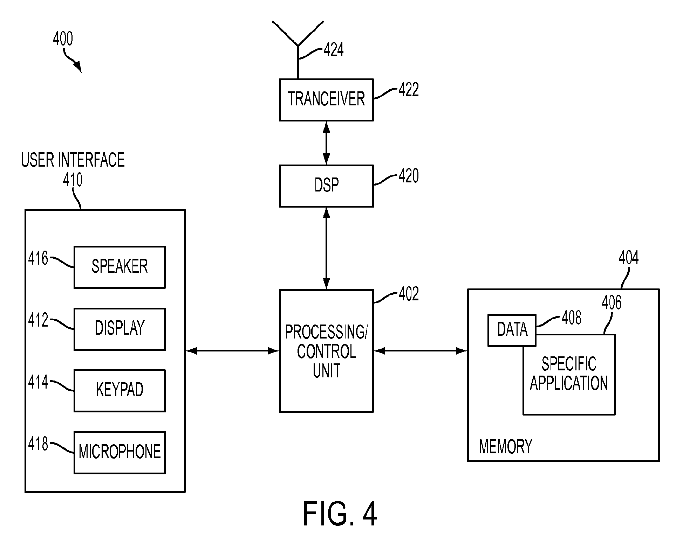

For purposes of illustration and not of limitation, an example of a representative mobile terminal computing system capable of carrying out operations in accordance with the exemplary embodiments is illustrated in Figure 4. It should be recognized, however, that the principles of the present exemplary embodiments are equally applicable to standard computing systems.

The exemplary mobile computing arrangement 400 may include a processing/control unit 402, such as a microprocessor, reduced instruction set computer (RISC), or other central processing module. The processing unit 402 need not be a single device, and may include one or more processors. For example, the processing unit 402 may include a master processor and associated slave processors coupled to communicate with the master processor.

The processing unit 402 may control the basic functions of a mobile terminal, e.g., UE 302, as dictated by programs available in the storage/memory 404. Thus, the processing unit 402 may execute the functions associated with exemplary embodiments described herein. More particularly, the storage/memory 404 may include an operating system and program modules for carrying out functions and applications on the mobile terminal. For example, the program storage may include one or more of read-only memory (ROM), flash ROM, programmable and/or erasable ROM, random access memory (RAM), subscriber interface module (SIM), wireless interface module (WIM), smart card, or other removable memory device, etc. The program modules and associated features may also be transmitted to the mobile computing arrangement 400 via data signals, such as being downloaded electronically via a network, such as the Internet.

One of the programs that may be stored in the storage/memory 404 is a specific program 406. As previously described, the specific program 406 may interact with a location server and/or a presence server 310 and/or a PCC XDMS 308 to fetch and/or subscribe to presence information as well as directly accessing a user's PCC document. The program 406 and associated features may be implemented in software and/or firmware operable by way of the processor 402. The program storage/memory 404 may also be used to store data 408, such as the various authentication rules, or other data associated with the present exemplary embodiments. In one exemplary embodiment, the programs 406 and data 408 are stored in non-volatile electrically-erasable, programmable ROM (EEPROM), flash ROM, etc. so that the information is not lost upon power down of the mobile terminal 400.

The processor 402 may also be coupled to user interface 410 elements associated with the mobile terminal. The user interface 410 of the mobile terminal may include, for example, a display 412 such as a liquid crystal display, a keypad 414, speaker 416, and a microphone 418. These and other user interface components are coupled to the processor 402 as is known in the art. The keypad 414 may include alpha-numeric keys for performing a variety of functions, including dialing numbers and executing operations assigned to one or more keys. Alternatively, other user interface mechanisms may be employed, such as voice commands, switches, touch pad/screen, graphical user interface using a pointing device, trackball, joystick, or any other user interface mechanism.

The mobile computing arrangement 400 may also include a digital signal processor (DSP) 420. The DSP 420 may perform a variety of functions, including analog-to-digital (A/D) conversion, digital-to-analog (D/A) conversion, speech coding/decoding, encryption/decryption, error detection and correction, bit stream translation, filtering, etc. The transceiver 422, generally coupled to an antenna 424, may transmit and receive the radio signals associated with a wireless device.

The mobile computing arrangement 400 of Figure 4 is provided as a representative example of a computing environment in which the principles of the exemplary embodiments described herein may be applied. From the description provided herein, those skilled in the art will appreciate that the present invention is equally applicable in a variety of other currently known and future mobile and fixed computing environments. For example, the specific application 406 and associated features, and data 408, may be stored in a variety of manners, may be operable on a variety of processing devices, and may be operable in mobile devices having additional, fewer, or different supporting circuitry and user interface mechanisms. It is noted that the principles of the present exemplary embodiments are equally applicable to non-mobile terminals, i.e., landline computing systems.

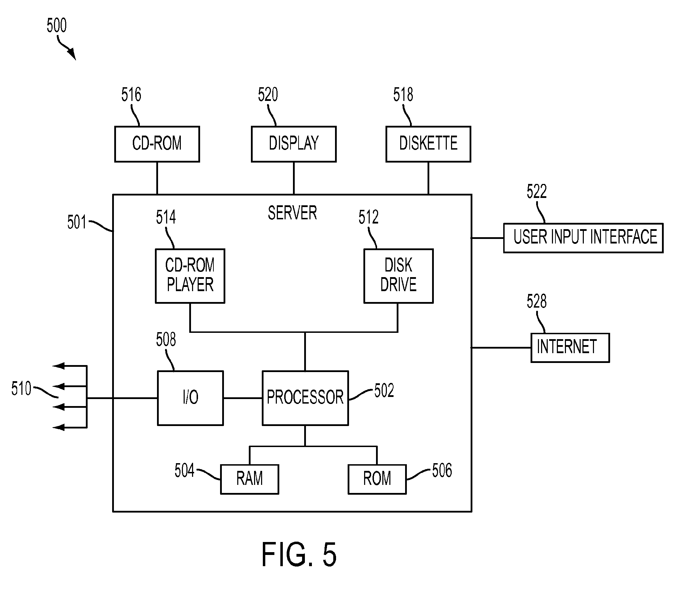

The presence, NAB or other systems providing PCC information or other information in connection with the present exemplary embodiments may be any type of computing device capable of processing and communicating presence information. An example of a representative computing system capable of carrying out operations in accordance with the servers of the exemplary embodiments is illustrated in Figure 5. Hardware, firmware, software or a combination thereof may be used to perform the various steps and operations described herein. The computing structure 500 of Figure 5 is an exemplary computing structure that may be used in connection with such a system.

The exemplary computing arrangement 500 suitable for performing the activities described in the exemplary embodiments may include server 501, which may correspond to any of the above-described servers, e.g., PCC XDMS 308 and presence server 310. Such a server 501 may include a central processor (CPU) 502 coupled to a random access memory (RAM) 504 and to a read-only memory (ROM) 506. The ROM 506 may also be other types of storage media to store programs, such as programmable ROM (PROM), erasable PROM (EPROM), etc. The processor 502 may communicate with other internal and external components through input/output (I/O) circuitry 508 and bussing 510, to provide control signals and the like. The processor 502 carries out a variety of functions as is known in the art, as dictated by software and/or firmware instructions.

The server 501 may also include one or more data storage devices, including hard and floppy disk drives 512, CD-ROM drives 514, and other hardware capable of reading and/or storing information such as DVD, etc. In one embodiment, software for carrying out the above discussed steps may be stored and distributed on a CD-ROM 516, diskette 518 or other form of media capable of portably storing information. These storage media may be inserted into, and read by, devices such as the CD-ROM drive 514, the disk drive 512, etc. The server 501 may be coupled to a display 520, which may be any type of known display or presentation screen, such as LCD displays, plasma display, cathode ray tubes (CRT), etc. A user input interface 522 is provided, including one or more user interface mechanisms such as a mouse, keyboard, microphone, touch pad, touch screen, voice-recognition system, etc.

The sever may be coupled to other computing devices, such as the landline and/or wireless terminals and associated watcher applications, via a network. The server may be part of a larger network configuration as in a global area network (GAN) such as the Internet 528, which allows ultimate connection to the various landline and/or mobile client/watcher devices.

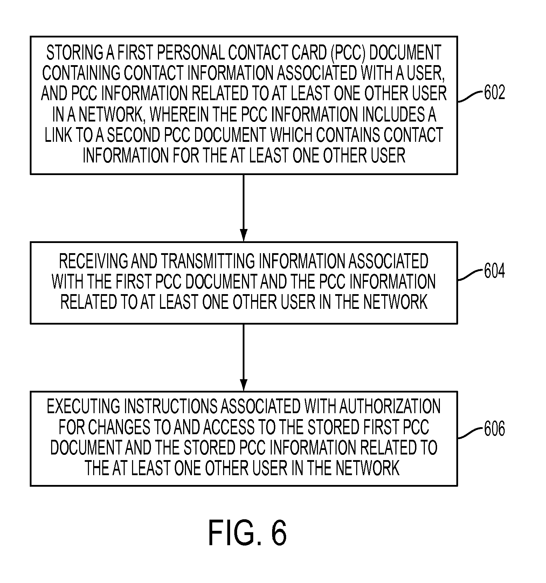

Utilizing the above-described exemplary systems according to exemplary embodiments, a method for reducing storage of data is shown in the flowchart of Figure 6. Initially a method for a method for reducing storage of data in a network includes: storing a first personal contact card (PCC) document containing contact information associated with a user, and PCC information related to at least one other user in a network, wherein the PCC information includes a link to a second PCC document which contains contact information for the at least one other user in step 602; receiving and transmitting information associated with the first PCC document and the PCC information related to at least one other user in the network in step 604; and executing instructions associated with authorization for changes to and access to the stored first PCC document and the stored PCC information related to the at least one other user in the network in step 606.

While various embodiments of the present invention have been described above, it should be understood that they have been presented by way of example only, and not limitation. Thus, the breadth and scope of the present invention should not be limited by any of the above described exemplary embodiments. Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

The above-described exemplary embodiments are intended to be illustrative in all respects, rather than restrictive, of the present invention. Thus the present invention is capable of many variations in detailed implementation that can be derived from the description contained herein by a person skilled in the art. No element, act, or instruction used in the description of the present application should be construed as critical or essential to the invention unless explicitly described as such. Also, as used herein, the article "a" is intended to include one or more items.

## Claims

1. A method in a communications node for reducing storage of data in a network comprising:
storing a first personal contact card, PCC, document containing contact information associated with a user, and PCC information related to at least one other user in a network, wherein said PCC information includes a link to a second PCC document which contains contact information for said at least one other user;
receiving and transmitting information associated with said first PCC document and said PCC information related to at least one other user in said network; and
executing instructions associated with authorization for changes to and access to said stored first PCC document and said stored PCC information related to said at least one other user in said network.

2. The method of claim 10, further comprising storing a copy of said second PCC document.

3. The method of claim 10, further comprising performing the function of a proxy for a user equipment, UE, and fetching, in a manner transparent to said UE, said second PCC document for said UE.

4. The method of claim 10, wherein said communications node is a personal contact card, PCC, extensible markup language, XML, data management server, XDMS.

5. The method of claim 10, wherein only a single copy of said first PCC document is stored in said network.

6. The method of claim 10, further comprising:
storing a directory for said user, wherein said directory includes a reference to each stored PCC information related to said at least one other user in said network.

7. The method of claim 10, further comprising:
storing a plurality of network address books, wherein each network address book is uniquely identified and associated with a single user.

8. The method of claim 10, further comprising:
distributing a first user's link to other PCC XDMSs, wherein said first user's link is a link to said first user's PCC document.

9. The method of claim 10, wherein said first user's link is stored in a field in a presence message.

10. A communications node comprising:
a memory configured to store a first personal contact card, PCC, document containing contact information associated with a user, and PCC information related to at least one other user in a network, wherein said PCC information includes a link to a second PCC document which contains contact information for said at least one other user;
a communications interface configured to receive and transmit information associated with said first PCC document and said PCC information related to at least one other user in said network; and
a processor configured to execute instructions associated with authorization for changes to and access to said stored first PCC document and said stored PCC information related to said at least one other user in said network.

11. The communications node of claim 1, wherein said memory is further configured to store a copy of said second PCC document.

12. The communications node of claim 1, wherein said processor is further configured to perform the function of a proxy for a user equipment, UE, and fetch, in a manner transparent to said UE, said second PCC document for said UE.

13. The communications node of claim 1, wherein said memory is further configured to store a directory for said user, wherein said directory includes a reference to each stored PCC information related to said at least one other user in said network;

14. The communications node of claim 1, wherein said memory is further configured to store a plurality of network address books, wherein each network address book is uniquely identified and associated with a single user.
